# EUROPEAN PATENT APPLICATION

(11) **EP 4 615 105 A1**
(43) Date of publication of application: **10.09.2025**
(21) Application number: 23884814.7
(22) Date of filing: 30.10.2023
(51) Int. Cl.: H04W 72/0453

(54) **METHOD AND DEVICE FOR NODE USED FOR WIRELESS COMMUNICATION**

(30) Priority: 04.11.2022 CN 202211379368
(71) Applicant: Apogee Networks, LLC, Dallas, TX 75201 (US)
(72) Inventor: JIANG, Qi, Shanghai 201206 (CN); ZHANG, Xiaobo, Shanghai 201206 (CN)
(74) Representative: Gunzelmann, Rainer
(86) International application number: PCT/CN2023/127600
(87) International publication number: WO 2024/093883

(57) **Abstract**

The present application discloses a method and device for a node used for wireless communication. A node first receives a target information set, the target information set being used for determining a first frequency domain resource set and a second frequency domain resource set; and then a first signal is sent in a first time-frequency resource set. The first frequency domain resource set and the second frequency domain resource set both belong to a first BWP; first serving cell configuration information is used for determining the first BWP, and the first serving cell configuration information is used for indicating a first identity and a second identity; the first identity and the second identity are respectively associated with the first frequency domain resource set and the second frequency domain resource set; the first serving cell configuration information is used for determining a first time domain resource set, and the first time domain resource set is associated with the first identity and the second identity. According to the present application, a resource configuration mode of subband non-overlapping full duplex is improved, so as to improve system performance.

## Description

### Technical Field

The present application relates to a transmission method and device for a wireless communication system, especially a transmission method and device for uplink wireless signals in a wireless communication system supporting a cellular network.

### Background Art

In an existing NR (New Radio) system, spectrum resources are statically divided into an FDD (Frequency Division Duplexing) spectrum and a TDD (Time Division Duplexing) spectrum. For the TDD spectrum, a base station and user equipment are both operated in a half-duplex mode. This half-duplex mode avoids a self-interference and can alleviate the impact of a cross-link interference, but it also brings about a decrease in resource utilization rate and an increase in latency. In view of these problems, supporting a flexible duplex mode on the TDD spectrum or the FDD spectrum has become a possible solution. At the 3GPP RAN (Radio Access Network) 1 #103e meeting, a research on a duplex technology was agreed. Therein, SBFD (Subband Non-overlapping Full Duplex) was proposed, i.e., base station equipment is supported to simultaneously perform sending and receiving on two subbands. Communications under this mode will suffer from serious interferences, including the self-interference and the cross-link interference. Meanwhile, the current R-17 system supports the introduction of an additional PCI (Physical Cell Identity). One serving cell can be configured with a PCI corresponding to the one serving cell and a plurality of additional PCIs, to achieve more flexible configuration and scheduling.

### Summary of the Invention

In the discussion of future R18 and subsequent technical evolution, when SBFD and the additional PCI are combined, there will be more complex configuration modes and application scenarios. In view of the above-mentioned scenarios, the existing configuration about a BWP (Bandwidth Part) and the currently discussed configuration about the SBFD need to be redesigned.

In view of the above-mentioned problem of combining the SBFD and the additional PCI, the present application discloses a solution. It should be explained that in the description of the present application, the SBFD is only used as one typical application scenario or example; and the present application is also applicable to other scenarios in which similar problems are faced, for example, a non-SBFD scenario, or is directed at different technical fields, such as other technical fields other than the resource configuration, for example, the field of measurement reporting and the fields of power control and other non-resource configuration, so as to achieve similar technical effects. In addition, the use of a unified solution for different scenarios (including but not limited to an SBFD scenario) also facilitates the reduction of hardware complexity and costs. In the absence of conflicts, the embodiments in any node of the present application and the features in the embodiments can be applied to any other node. In the absence of conflicts, the embodiments of the present application and the features in the embodiments can be arbitrarily combined with each other. In particular, the interpretation of the terminologies, nouns, functions, and variables in the present application (if not specifically stated) can refer to the definitions in the 3GPP specification protocols TS36 series, TS38 series, and TS37 series. If necessary, reference may be made to 3GPP standards TS38.211, TS38.212, TS38.213, TS38.214, TS38.215, TS38.321, TS38.331, TS38.305, and TS37.355 to assist in understanding the present application.

The present application discloses a method for a first node used for wireless communication, comprising:
receiving a target information set, the target information set being used for determining a first frequency domain resource set and a second frequency domain resource set; and
sending a first signal in a first time-frequency resource set,
wherein the first frequency domain resource set and the second frequency domain resource set both belong to a first BWP; first serving cell configuration information is used for determining the first BWP, and the first serving cell configuration information is used for indicating a first identity and a second identity; the first identity and the second identity are respectively associated with the first frequency domain resource set and the second frequency domain resource set; the first serving cell configuration information is used for determining a first time domain resource set, at least one time domain resource in the first time domain resource set is associated with the first identity, and at least one time domain resource in the first time domain resource set is associated with the second identity; and frequency domain resources occupied by the first time-frequency resource set belong to one of the first frequency domain resource set or the second frequency domain resource set, and time domain resources occupied by the first time-frequency resource set belong to the first time domain resource set.

As one embodiment, the above-mentioned method is characterized in that: two independent frequency domain resources for uplink transmissions are respectively configured for the first identity and the second identity, thereby ensuring flexibility.

As one embodiment, the above-mentioned method is characterized in that: the first identity and the second identity share the same first time domain resource set, thereby ensuring the performance of mobility management.

According to one aspect of the present application, the first BWP is one downlink BWP, and the first frequency domain resource set and the second frequency domain resource set are both reserved for the uplink transmission.

As one embodiment, the above-mentioned method is characterized in that: the first frequency domain resource set and the second frequency domain resource set are both subbands which are configured in one downlink BWP and can perform the uplink transmission.

According to one aspect of the present application, the first identity is one PCI, and the second identity is a PCI other than the PCI corresponding to the first identity.

According to one aspect of the present application, the first signal and a target reference signal resource are quasi co-located, and the target reference signal resource is a first reference signal resource or a second reference signal resource; the first reference signal resource and the second reference signal resource are respectively associated with the first identity and the second identity; and the target reference signal resource is the first reference signal resource and the frequency domain resources occupied by the first time-frequency resource set belong to the first frequency domain resource set, or the target reference signal resource is the second reference signal resource and the frequency domain resources occupied by the first time-frequency resource set belong to the second frequency domain resource set.

As one embodiment, the above-mentioned method is characterized in that: according to the spatial relationship, the first signal determines to use the frequency band resource corresponding to one of the first identity and the second identity for the uplink transmission.

According to one aspect of the present application, the first time domain resource set comprises a first time domain resource subset and a second time domain resource subset, and the first time domain resource subset and the second time domain resource subset are respectively associated with the first identity and the second identity; whether the frequency domain resources occupied by the first time-frequency resource set belong to the first frequency domain resource set or the second frequency domain resource set depends on whether the time domain resources occupied by the first time-frequency resource set belong to the first time domain resource subset or the second time domain resource subset.

As one embodiment, the above-mentioned method is characterized in that: two independent time domain resources for the uplink transmission are respectively configured for the first identity and the second identity, thereby further ensuring flexibility.

According to one aspect of the present application, the first serving cell configuration information comprises first downlink BWP configuration information, the first downlink BWP configuration information is used for configuring the first BWP, and the first downlink BWP configuration information is associated with target uplink configuration information; and the target uplink configuration information comprises at least one of pucch-Config, pusch-Config, configuredGrantConfig, or srs-Config, and the first signal uses the target uplink configuration information.

As one embodiment, the above-mentioned method is characterized in that: a configuration about the uplink transmission is embedded in the configuration information of one downlink BWP.

According to one aspect of the present application, the target uplink configuration information is one of first uplink configuration information or second uplink configuration information, the first uplink configuration information is associated with the first identity, and the second uplink configuration information is associated with the second identity; and a TCI corresponding to the first signal is used for determining the target uplink configuration information from the first uplink configuration information and the second uplink configuration information.

As one embodiment, the above-mentioned method is characterized in that: two groups of configurations about the uplink transmission are embedded in the configuration information of one downlink BWP to be respectively associated with two identities.

The present application discloses a method for a second node used for wireless communication, comprising:
sending a target information set, the target information set being used for determining a first frequency domain resource set and a second frequency domain resource set; and
receiving a first signal in a first time-frequency resource set,
wherein the first frequency domain resource set and the second frequency domain resource set both belong to a first BWP; first serving cell configuration information is used for determining the first BWP, and the first serving cell configuration information is used for indicating a first identity and a second identity; the first identity and the second identity are respectively associated with the first frequency domain resource set and the second frequency domain resource set; the first serving cell configuration information is used for determining a first time domain resource set, at least one time domain resource in the first time domain resource set is associated with the first identity, and at least one time domain resource in the first time domain resource set is associated with the second identity; and frequency domain resources occupied by the first time-frequency resource set belong to one of the first frequency domain resource set or the second frequency domain resource set, and time domain resources occupied by the first time-frequency resource set belong to the first time domain resource set.

According to one aspect of the present application, the first BWP is one downlink BWP, and the first frequency domain resource set and the second frequency domain resource set are both reserved for the uplink transmission.

According to one aspect of the present application, the first identity is one PCI, and the second identity is a PCI other than the PCI corresponding to the first identity.

According to one aspect of the present application, the first signal and a target reference signal resource are quasi co-located, and the target reference signal resource is a first reference signal resource or a second reference signal resource; the first reference signal resource and the second reference signal resource are respectively associated with the first identity and the second identity; and the target reference signal resource is the first reference signal resource and the frequency domain resources occupied by the first time-frequency resource set belong to the first frequency domain resource set, or the target reference signal resource is the second reference signal resource and the frequency domain resources occupied by the first time-frequency resource set belong to the second frequency domain resource set.

According to one aspect of the present application, the first time domain resource set comprises a first time domain resource subset and a second time domain resource subset, and the first time domain resource subset and the second time domain resource subset are respectively associated with the first identity and the second identity; whether the frequency domain resources occupied by the first time-frequency resource set belong to the first frequency domain resource set or the second frequency domain resource set depends on whether the time domain resources occupied by the first time-frequency resource set belong to the first time domain resource subset or the second time domain resource subset.

According to one aspect of the present application, the first serving cell configuration information comprises first downlink BWP configuration information, the first downlink BWP configuration information is used for configuring the first BWP, and the first downlink BWP configuration information is associated with target uplink configuration information; and the target uplink configuration information comprises at least one of pucch-Config, pusch-Config, configuredGrantConfig, or srs-Config, and the first signal uses the target uplink configuration information.

According to one aspect of the present application, the target uplink configuration information is one of first uplink configuration information or second uplink configuration information, the first uplink configuration information is associated with the first identity, and the second uplink configuration information is associated with the second identity; and a TCI corresponding to the first signal is used for determining the target uplink configuration information from the first uplink configuration information and the second uplink configuration information.

The present application discloses a first node used for wireless communication, comprising:
a first receiver for receiving a target information set, the target information set being used for determining a first frequency domain resource set and a second frequency domain resource set; and
a first transmitter for sending a first signal in a first time-frequency resource set,
wherein the first frequency domain resource set and the second frequency domain resource set both belong to a first BWP; first serving cell configuration information is used for determining the first BWP, and the first serving cell configuration information is used for indicating a first identity and a second identity; the first identity and the second identity are respectively associated with the first frequency domain resource set and the second frequency domain resource set; the first serving cell configuration information is used for determining a first time domain resource set, at least one time domain resource in the first time domain resource set is associated with the first identity, and at least one time domain resource in the first time domain resource set is associated with the second identity; and frequency domain resources occupied by the first time-frequency resource set belong to one of the first frequency domain resource set or the second frequency domain resource set, and time domain resources occupied by the first time-frequency resource set belong to the first time domain resource set.

The present application discloses a second node used for wireless communication, comprising:
a second transmitter for sending a target information set, the target information set being used for determining a first frequency domain resource set and a second frequency domain resource set; and
a second receiver for receiving a first signal in a first time-frequency resource set,
wherein the first frequency domain resource set and the second frequency domain resource set both belong to a first BWP; first serving cell configuration information is used for determining the first BWP, and the first serving cell configuration information is used for indicating a first identity and a second identity; the first identity and the second identity are respectively associated with the first frequency domain resource set and the second frequency domain resource set; the first serving cell configuration information is used for determining a first time domain resource set, at least one time domain resource in the first time domain resource set is associated with the first identity, and at least one time domain resource in the first time domain resource set is associated with the second identity; and frequency domain resources occupied by the first time-frequency resource set belong to one of the first frequency domain resource set or the second frequency domain resource set, and time domain resources occupied by the first time-frequency resource set belong to the first time domain resource set.

As one embodiment, the benefit of the solution in the present application lies in the optimization of the resource allocation mode to improve performance.

### Brief Description of the Drawings

Other features, purposes, and advantages of the present application will become more apparent by reading the detailed description of the non-limiting embodiments with reference to the following figures:
FIG. 1 shows a processing flow chart of a first node according to one embodiment of the present application;
FIG. 2 shows a schematic diagram of a network architecture according to one embodiment of the present application;
FIG. 3 shows a schematic diagram of an embodiment of radio protocol architectures for a user plane and a control plane according to one embodiment of the present application;
FIG. 4 shows a schematic diagram of a first communication device and a second communication device according to one embodiment of the present application;
FIG. 5 shows a flow chart of a target information set according to one embodiment of the present application;
FIG. 6 shows a schematic diagram of a target information set according to one embodiment of the present application;
FIG. 7 shows a schematic diagram of a first frequency domain resource set and a second frequency domain resource set according to one embodiment of the present application;
FIG. 8 shows a schematic diagram of a first time domain resource set according to one embodiment of the present application;
FIG. 9 shows a schematic diagram of first downlink BWP configuration information according to one embodiment of the present application;
FIG. 10 shows a schematic diagram of first downlink BWP configuration information according to another embodiment of the present application;
FIG. 11 shows a schematic diagram of an application scenario according to one embodiment of the present application;
FIG. 12 shows a structural block diagram of a processing apparatus in a first node device according to one embodiment of the present application; and
FIG. 13 shows a structural block diagram of a processing apparatus in a second node device according to one embodiment of the present application.

### Detailed Description of Embodiments

The technical solution of the present application will be further described in detail below in conjunction with the accompanying drawings. It should be explained that in the absence of conflicts, the embodiments of the present application and the features in the embodiments can be arbitrarily combined with each other.

### Embodiment 1

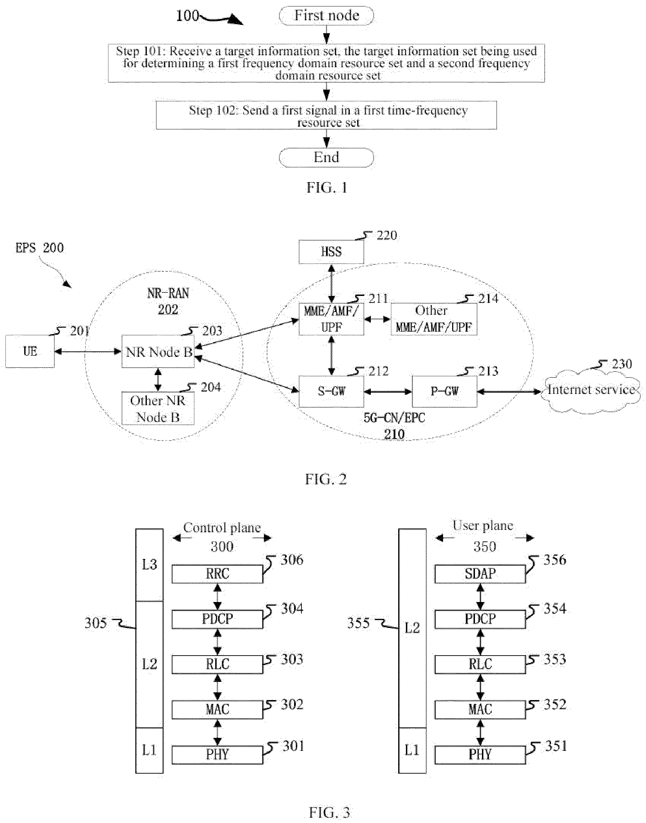

Embodiment 1 illustrates a processing flow chart of one first node, as shown in FIG. 1. In 100 shown in FIG. 1, each block represents one step. In Embodiment 1, in step 101, the first node in the present application receives a target information set, the target information set being used for determining a first frequency domain resource set and a second frequency domain resource set; and in step 102, a first signal is sent in a first time-frequency resource set.

In Embodiment 1, the first frequency domain resource set and the second frequency domain resource set both belong to a first BWP; first serving cell configuration information is used for determining the first BWP, and the first serving cell configuration information is used for indicating a first identity and a second identity; the first identity and the second identity are respectively associated with the first frequency domain resource set and the second frequency domain resource set; the first serving cell configuration information is used for determining a first time domain resource set, at least one time domain resource in the first time domain resource set is associated with the first identity, and at least one time domain resource in the first time domain resource set is associated with the second identity; and frequency domain resources occupied by the first time-frequency resource set belong to one of the first frequency domain resource set or the second frequency domain resource set, and time domain resources occupied by the first time-frequency resource set belong to the first time domain resource set.

As one embodiment, the target information set comprises an RRC (Radio Resource Control) signaling.

As one embodiment, the target information set comprises one RRC signaling.

As one embodiment, the target information set comprises a plurality of RRC signaling.

As one embodiment, the target information set comprises 1 field in one IE (Information Element) in TS 38.331.

As one embodiment, the target information set comprises a plurality of fields in one IE in TS 38.331.

As one embodiment, the target information set comprises BWP-Downlink IE in TS 38.331.

As one sub-embodiment of this embodiment, the target information set comprises one or more fields in BWP-Downlink.

As one embodiment, the target information set comprises a BWP-DownlinkCommon IE in TS 38.331.

As one sub-embodiment of this embodiment, the target information set comprises one or more fields in BWP-DownlinkCommon.

As one embodiment, the target information set comprises BWP-DownlinkDedicated IE in TS 38.331.

As one sub-embodiment of this embodiment, the target information set comprises one or more fields in BWP-DownlinkDedicated.

As one embodiment, the name of the RRC signaling included in the target information set comprises BWP.

As one embodiment, the name of the RRC signaling included in the target information set comprises Downlink.

As one embodiment, the name of the RRC signaling included in the target information set comprises Common.

As one embodiment, the name of the RRC signaling included in the target information set comprises Dedicated.

As one embodiment, the target information set is cell-specific.

As one embodiment, the target information set is UE-specific.

As one embodiment, the first frequency domain resource set comprises a plurality of RB (Resource Block) sets.

As one embodiment, the first frequency domain resource set comprises one RB set.

As one sub-embodiment of this embodiment, the RB set included in the first frequency domain resource set comprises a positive integer number of RBs.

As one sub-embodiment of this embodiment, the RBs included in the RB set included in the first frequency domain resource set are continuous in a frequency domain.

As one embodiment, the second frequency domain resource set comprises a plurality of RB sets.

As one embodiment, the second frequency domain resource set comprises one RB set.

As one sub-embodiment of this embodiment, the RB set included in the second frequency domain resource set comprises a positive integer number of RBs.

As one sub-embodiment of this embodiment, the RBs included in the RB set included in the second frequency domain resource set are continuous in the frequency domain.

As one embodiment, the first frequency domain resource set comprises a positive integer number of subcarriers greater than 1.

As one embodiment, the second frequency domain resource set includes a positive integer number of subcarriers greater than 1.

As one embodiment, the target information set is used for indicating the first frequency domain resource set.

As one embodiment, the target information set is used for explicitly indicating the first frequency domain resource set.

As one embodiment, the target information set is used for implicitly indicating the first frequency domain resource set.

As one embodiment, the target information set is used for indicating the second frequency domain resource set.

As one embodiment, the target information set is used for explicitly indicating the second frequency domain resource set.

As one embodiment, the target information set is used for implicitly indicating the second frequency domain resource set.

As one embodiment, the first time-frequency resource set occupies a positive integer number of REs greater than 1.

As one embodiment, the first time-frequency resource set occupies a bandwidth corresponding to a positive integer number of RBs in the frequency domain, and occupies a positive integer number of multi-carrier symbols in a time domain.

As one embodiment, a physical layer channel occupied by the first signal comprises a PUCCH (Physical Uplink Control Channel).

As one embodiment, a physical layer channel occupied by the first signal comprises a PUSCH (Physical Uplink Shared Channel).

As one embodiment, a physical layer channel occupied by the first signal comprises a PRACH (Physical Random Access Channel).

As one embodiment, the first signal comprises a CSI-RS (Channel State Information Reference Signal).

As one embodiment, the first signal comprises an SRS (Sounding Reference Signal).

As one embodiment, a transmission channel corresponding to the first signal comprises a UL-SCH (Uplink Shared Channel).

As one embodiment, the first signal corresponds to one PUSCH with a dynamic grant.

As one embodiment, the first signal corresponds to one PUSCH with a configured grant.

As one embodiment, the first BWP is one downlink BWP.

As one embodiment, the first BWP comprises the downlink BWP.

As one embodiment, the first serving cell configuration information comprises ServingCellConfig IE in TS 38.331.

As one embodiment, the first serving cell configuration information comprises ServingCellConfigCommon IE in TS 38.331.

As one embodiment, the first serving cell configuration information comprises SCellConfig in TS 38.331.

As one embodiment, the first serving cell configuration information comprises sCellConfigCommon in TS 38.331.

As one embodiment, the first serving cell configuration information comprises sCellConfigDedicated in TS 38.331.

As one embodiment, the first serving cell configuration information is used for configuring a first serving cell, and the first serving cell comprises the first BWP.

As one sub-embodiment of this embodiment, the first serving cell corresponds to one serving cell of the first node.

As one sub-embodiment of this embodiment, the first serving cell corresponds to the first identity.

As one sub-embodiment of this embodiment, the first serving cell is associated with the second identity.

As one embodiment, the first identity corresponds to one non-negative integer.

As one embodiment, the second identity corresponds to one non-negative integer.

As one embodiment, the first identity corresponds to one PCI.

As one embodiment, the second identity corresponds to one PCI.

As one embodiment, the first identity and the second identity are different.

As one embodiment, the first identity corresponds to one serving cell PCI.

As one embodiment, the second identity corresponds to one AdditionalPCI.

As one embodiment, the first identity is associated with the first frequency domain resource set.

As one embodiment, the second identity is associated with the second frequency domain resource set.

As one embodiment, the first identity corresponds to the first frequency domain resource set.

As one embodiment, the second identity corresponds to the second frequency domain resource set.

As one embodiment, the spatial sending parameters corresponding to the first signal are associated with the first identity, and the frequency domain resources occupied by the first time-frequency resource set belong to the first frequency domain resource set.

As one embodiment, the spatial sending parameters corresponding to the first signal are associated with the second identity, and the frequency domain resources occupied by the first time-frequency resource set belong to the second frequency domain resource set.

As one embodiment, the first serving cell configuration information is used for indicating the first time domain resource set.

As one embodiment, the first time domain resource set comprises one time unit set, and the first serving cell configuration information is used for indicating the time unit set.

As one sub-embodiment of this embodiment, the first serving cell configuration information is used for indicating a time unit for a downlink transmission in the time unit set.

As one sub-embodiment of this embodiment, the first serving cell configuration information is used for indicating a time unit for the uplink transmission in the time unit set.

As one sub-embodiment of this embodiment, the first serving cell configuration information is used for indicating a time unit configured as "flexible" in the time unit set.

As one sub-embodiment of this embodiment, the time unit set comprises K1 time units, the K1 is a positive integer greater than 1, and the K1 time units correspond to K1 time slots, respectively.

As one sub-embodiment of this embodiment, the time unit set comprises K1 time units, the K1 is a positive integer greater than 1, and the K1 time units correspond to K1 multi-carrier symbols, respectively.

As one sub-embodiment of this embodiment, the time unit set comprises K1 time units, the K1 is a positive integer greater than 1, and the K1 time units correspond to K1 subframes, respectively.

As one embodiment, parts or all of the time domain resources in the first time domain resource set are associated with the first identity.

As one embodiment, parts or all of the time domain resources in the first time domain resource set are associated with the second identity.

As one embodiment, at least one time domain resource in the first time domain resource set is simultaneously associated with the first identity and the second identity.

As one embodiment, the first time domain resource set is simultaneously associated with the first identity and the second identity.

As one embodiment, the first time domain resource set comprises a first time domain resource subset and a second time domain resource subset, and the first time domain resource subset and the second time domain resource subset are respectively associated with the first identity and the second identity.

As one embodiment, the first time domain resource set comprises K2 time domain resources, the K2 is a positive integer greater than 1, and the K2 time domain resources correspond to K2 time slots, respectively.

As one embodiment, the first time domain resource set comprises K2 time domain resources, the K2 is a positive integer greater than 1, and the K2 time domain resources correspond to K2 subframes, respectively.

As one embodiment, the first time domain resource set comprises K2 time domain resources, the K2 is a positive integer greater than 1, and the K2 time domain resources correspond to K2 multi-carrier symbols, respectively.

As one embodiment, the first time domain resource set corresponds to TDD-UL-DL-ConfigDedicated.

As one embodiment, the first time domain resource set corresponds to TDD-UL-DL-ConfigCommon.

As one embodiment, the meaning that at least one time domain resource in the first time domain resource set is associated with the first identity comprises: the first time domain resource set is applied to the serving cell corresponding to the first identity.

As one embodiment, the meaning that at least one time domain resource in the first time domain resource set is associated with the first identity comprises: the first time domain resource set is used for determining the uplink/downlink TDD configuration of the serving cell corresponding to the first identity.

As one embodiment, the meaning that at least one time domain resource in the first time domain resource set is associated with the first identity comprises: the first time domain resource set is used for determining the uplink/downlink TDD (Time Division Duplexing) configuration of the TRP (Transmitter Receiver Point) corresponding to the first identity.

As one embodiment, the meaning that at least one time domain resource in the first time domain resource set is associated with the first identity comprises: the first time domain resource set is used for determining the uplink/downlink TDD configuration used by the node associated with the SSBs (Synchronization Signal/Physical Broadcast Channel Blocks) corresponding to the first identity.

As one embodiment, the meaning that at least one time domain resource in the first time domain resource set is associated with the second identity comprises: the first time domain resource set is applied to the serving cell corresponding to the second identity.

As one embodiment, the meaning that at least one time domain resource in the first time domain resource set is associated with the second identity comprises: the first time domain resource set is used for determining the uplink/downlink TDD configuration of the serving cell corresponding to the second identity.

As one embodiment, the meaning that at least one time domain resource in the first time domain resource set is associated with the second identity comprises: the first time domain resource set is used for determining the uplink/downlink TDD configuration of the TRP corresponding to the second identity.

As one embodiment, the meaning that at least one time domain resource in the first time domain resource set is associated with the second identity comprises: the first time domain resource set is used for determining the uplink/downlink TDD configuration used by the node associated with the SSBs corresponding to the second identity.

As one embodiment, the multi-carrier symbol in the present application is an OFDM (Orthogonal Frequency Division Multiplexing) symbol.

As one embodiment, the multi-carrier symbol in the present application is an SC-FDMA (Single-Carrier Frequency Division Multiple Access) symbol.

As one embodiment, the multi-carrier symbol in the present application is a DFT-S-OFDM (Discrete Fourier Transform Spread Orthogonal Frequency Division Multiplexing) symbol.

As one embodiment, the multi-carrier symbol in the present application is an IFDMA (Interleaved Frequency Division Multiple Access) symbol.

As one embodiment, the first identity corresponds to one TRP of the serving cell of the first node, and the second identity corresponds to one TRP other than the TRP corresponding to the first identity.

As one embodiment, the first identity corresponds to one SRS resource set.

As one embodiment, the second identity corresponds to one SRS resource set.

As one embodiment, the first identity corresponds to one CORESET (Control Resource Set) Pool Index.

As one embodiment, the second identity corresponds to one CORESET Pool Index.

As one embodiment, the first signal comprises a wireless signal.

As one embodiment, the first signal includes a baseband signal.

### Embodiment 2

Embodiment 2 illustrates a schematic diagram of a network architecture, as shown in FIG. 2.

FIG. 2 illustrates a diagram of a network architecture 200 for 5G NR, LTE (Long-Term Evolution) and LTE-A (Long-Term Evolution Advanced) systems. The 5G NR or LTE network architecture 200 may be referred to as an EPS (Evolved Packet System) 200 or some other suitable terms. The EPS 200 may comprise one piece of UE (User Equipment) 201, an NR-RAN (Next Generation Radio Access Network) 202, an EPC (Evolved Packet Core)/5G-CN (5G-Core Network) 210, an HSS (Home Subscriber Server) 220, and an Internet Service 230. The EPS may be interconnected with other access networks, but these entities/interfaces are not shown for simplicity. As shown in the figure, the EPS provides packet-switched services, but those skilled in the art will readily appreciate that various concepts presented throughout the present application may be extended to a network providing a circuit-switched service or other cellular networks. The NR-RAN comprises an NR Node B (gNB) 203 and other gNB204. The gNB203 provides user and control plane protocol terminations toward the UE201. The gNB203 may be connected to the other gNB204 via an Xn interface (for example, backhaul). The gNB203 may also be referred to as a base station, a base transceiving station, a radio base station, a radio transceiver, a transceiver function, a basic service set (BSS), an extended service set (ESS), a TRP (Transmitter Receiver Point), or some other suitable terms. The gNB203 provides an access point to the EPC/5G-CN 210 for the UE201. Examples of the UE201 comprises a cellular phone, a smart phone, a session initiation protocol (SIP) phone, a laptop, a personal digital assistant (PDA), a satellite radio, non-terrestrial base station communication, satellite mobile communication, a global positioning system, a multimedia apparatus, a video apparatus, a digital audio player (for example, an MP3 player), a camera, a game console, a drone, an aircraft, a narrowband Internet of Things device, a machine type communication device, a land vehicle, an automobile, a wearable device, or any other similarly functional apparatuses. Those skilled in the art may also call the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terms. The gNB203 is connected to the EPC/5G-CN 210 by an S1/NG interface. The EPC/5G-CN 210 comprises an MME (Mobility Management Entity)/AMF (Authentication Management Field)/UPF (User Plane Function) 211, other MME/AMF/UPF214, an S-GW (Service Gateway) 212, and a P-GW (Packet Data Network Gateway) 213. The MME/AMF/UPF211 is a control node that processes a signaling between the UE201 and the EPC/5G-CN 210. Generally, the MME/AMF/UPF211 provides bearer and connection management. All user IP (Internet Protocol) packets are transmitted by the S-GW212, and the S-GW212 itself is connected to the P-GW213. The P-GW213 provides UE IP address allocation and other functions. The P-GW213 is connected to an Internet service 230. The Internet service 230 comprises an Internet protocol service corresponding to an operator, and may specifically comprise the Internet, the intranet, an IMS (IP Multimedia Subsystem) and a packet switching streaming service.

As one embodiment, the UE201 corresponds to the first node in the present application.

As one embodiment, the UE201 is one piece of user equipment (UE).

As one embodiment, the UE201 is one terminal (ender).

As one embodiment, the UE201 supports an unpaired spectrum scenario.

As one embodiment, the UE201 supports a frequency domain resource configuration of flexible duplex.

As one embodiment, the UE201 supports a full duplex transmission.

As one embodiment, the UE201 supports dynamic adjustment of uplink and downlink transmission directions.

As one embodiment, the UE201 supports the SBFD.

As one embodiment, the node 203 corresponds to the second node in the present application.

As one embodiment, the node 203 is one piece of base station equipment (BaseStation, BS).

As one embodiment, the node 203 is one base transceiver station (BTS).

As one embodiment, the node 203 is one node B (NodeB, NB), or gNB, or eNB, or ng-eNB, or en-gNB, or user equipment, or relay, or gateway, or at least one TRP.

As one embodiment, the node 203 comprises at least one TRP.

As one embodiment, the node 203 comprises one TRP identified by the first identity, and the node 203 comprises one TRP identified by the second identity.

As one embodiment, the node 203 is one logical node.

As one embodiment, different structures in the node 203 are located in the same entity.

As one embodiment, different structures in the node 203 are located in different entities.

As one embodiment, the node 203 corresponds to the second node in the present application.

As one embodiment, the node 203 supports the unpaired spectrum scenario.

As one embodiment, the node 203 supports a frequency domain resource configuration of flexible duplex.

As one embodiment, the node 203 supports a full duplex transmission.

As one embodiment, the node 203 supports dynamic adjustment of uplink and downlink transmission directions.

As one embodiment, the node 203 supports the SBFD.

As one embodiment, the user equipment supports a transmission in a terrestrial network (NTN).

As one embodiment, the user equipment supports a transmission in a non-terrestrial network.

As one embodiment, the user equipment supports a transmission in a large delay difference network.

As one embodiment, the user equipment supports a dual connection (DC) transmission.

As one embodiment, the user equipment supports NR.

As one embodiment, the user equipment supports UTRA.

As one embodiment, the user equipment supports EUTRA.

As one embodiment, the user equipment comprises equipment that supports a low-delay and high-reliability transmission.

As one embodiment, the user equipment comprises an aircraft, or a vehicle-mounted terminal, or a ship, or an Internet of Things terminal, or an industrial Internet of Things terminal, or a test device, or a signaling tester.

As one embodiment, the base station equipment supports the transmission in the non-terrestrial network.

As one embodiment, the base station equipment supports the transmission in the large delay difference network.

As one embodiment, the base station equipment supports the transmission in the terrestrial network.

As one embodiment, the base station equipment comprises base station equipment that supports a large delay difference.

As one embodiment, the base station equipment comprises a macro cellular base station, or a micro cell base station, or a pico cell base station, or a femtocell.

As one embodiment, the base station equipment comprises flight platform equipment, or satellite equipment, or a TRP (Transmitter Receiver Point), or a CU (Centralized Unit), or a DU (Distributed Unit), or test equipment, or a signaling tester, or an IAB (Integrated Access and Backhaul)-node, or an IAB-donor, or an IAB-donor-CU, or an IAB-donor-DU, or an IAB-DU, or an IAB-MT.

### Embodiment 3

Embodiment 3 shows a schematic diagram of an embodiment of radio protocol architectures for one user plane and one control plane according to the present application, as shown in FIG. 3. FIG. 3 is a schematic diagram illustrating an embodiment of radio protocol architectures for a user plane 350 and a control plane 300, and FIG. 3 exhibits the radio protocol architecture for the control plane 300 between a first communication node device (UE, gNB, or RSU in V2X) and a second communication node device (gNB, UE, or RSU in V2X) by using three layers: layer 1, layer 2, and layer 3. The layer 1 (L1 layer) is the lowest layer and implements various PHY (physical layer) signal processing functions. The L1 layer will be herein referred to as PHY301. The layer 2 (L2 layer) 305 is above PHY301 and is responsible for the link between the first communication node device and the second communication node device by PHY301. The L2 layer 305 comprises a MAC (Medium Access Control) sublayer 302, an RLC (Radio Link Control) sublayer 303, and a PDCP (Packet Data Convergence Protocol) sublayer 304, which terminate at the second communication node device. The PDCP sublayer 304 provides multiplexing between different radio bearer and logical channels. The PDCP sublayer 304 also provides security by encrypting data packets, and the PDCP sublayer 304 also provides zone-crossing mobility support of the first communication node device for the second communication node device. The RLC sublayer 303 provides segmentation and reassembly of upper-layer data packets, retransmission of lost data packets, and reordering of data packets to compensate for unordered reception caused by HARQ. The MAC sublayer 302 provides multiplexing between logical and transmission channels. The MAC sublayer 302 is also responsible for allocating, between the first communication node devices, various radio resources (for example, resource blocks) in one cell. The MAC sublayer 302 is also responsible for HARQ operations. The RRC (Radio Resource Control) sublayer 306 in the layer 3 (L3 layer) in the control plane 300 is responsible for obtaining radio resources (i.e., radio bearers) and configuring a lower layer by using the RRC signaling between the second communication node device and the first communication node device. The radio protocol architecture for the user plane 350 comprises a layer 1 (L1 layer) and a layer 2 (L2 layer). The radio protocol architecture for the first communication node device and the second communication node device in the user plane 350 for the physical layer 351, the PDCP sublayer 354 in the L2 layer 355, the RLC sublayer 353 in the L2 layer 355, and the MAC sublayer 352 in the L2 layer 355 is substantially the same as that in the control plane 300 for the corresponding layers and sublayers, but the PDCP sublayer 354 also provides header compression for upper-layer data packets to reduce radio transmission overhead. The L2 layer 355 in the user plane 350 further comprises an SDAP (Service Data Adaptation Protocol) sublayer 356, and the SDAP sublayer 356 is responsible for mapping between a QoS stream and a data radio bearer (DRB) to support the diversity of services. Although not shown, the first communication node device may have several upper layers above the L2 layer 355, comprising a network layer (for example, an IP layer) terminated at P-GW on the network side and an application layer terminated at the connected other end (for example, remote UE, a server, etc.).

As one embodiment, the radio protocol architecture in FIG. 3 is applicable to the first node in the present application.

As one embodiment, the radio protocol architecture in FIG. 3 is applicable to the second node in the present application.

As one embodiment, the PDCP304 of the second communication node device is used for generating the scheduling of the first communication node device.

As one embodiment, the PDCP354 of the second communication node device is used for generating the scheduling of the first communication node device.

As one embodiment, the target information set is generated in the MAC302 or MAC352.

As one embodiment, the target information set is generated in the RRC306.

As one embodiment, the first signal is generated in the RRC306.

As one embodiment, the first signal is generated in the MAC302 or the MAC352.

As one embodiment, the first signal is generated in the RRC306.

As one embodiment, the first node is one terminal.

As one embodiment, the first node is one relay.

As one embodiment, the second node is one relay.

As one embodiment, the second node is one base station.

As one embodiment, the second node is one gNB.

As one embodiment, the second node is one TRP (Transmitter Receiver Point).

As one embodiment, the second node is used for managing a plurality of TRPs.

As one embodiment, the second node is a node for managing a plurality of cells.

### Embodiment 4

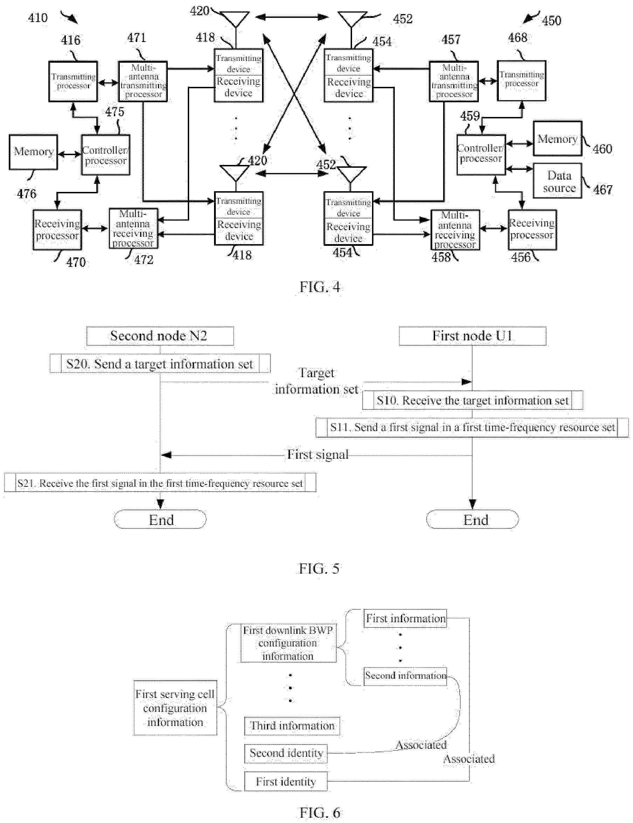

Embodiment 4 shows a schematic diagram of a first communication device and a second communication device according to the present application, as shown in FIG. 4. FIG. 4 is a block diagram of a first communication device 450 and a second communication device 410 communicating with each other in an access network.

The first communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454 and an antenna 452.

The second communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

In the transmission from the second communication device 410 to the first communication device 450, at the second communication device 410, an upper-layer data packet from a core network is provided to the controller/processor 475. The controller/processor 475 implements the functionality of the L2 layer. In the transmission from the second communication device 410 to the first communication device 450, the controller/processor 475 provides header compression, encryption, packet segmentation and reordering, multiplexing between logical and transport channels, and radio resource allocation to the first communication device 450 based on various priority metrics. The controller/processor 475 is also responsible for retransmission of a lost packet, and for a signaling to the first communication device 450. The transmitting processor 416 and the multi-antenna transmitting processor 471 implement various signal processing functions for an L1 layer (i.e., a physical layer). The transmitting processor 416 implements coding and interleaving to facilitate forward error correction (FEC) at the second communication device 410, as well as mapping of signal constellations based on various modulation schemes (for example, binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding (comprising codebook-based precoding and non-codebook-based precoding) and beamforming processing on the coded and modulated symbols to generate one or more spatial streams. The transmitting processor 416 then maps each spatial stream to a subcarrier, multiplexes with a reference signal (for example, a pilot frequency) in the time domain and/or frequency domain, and subsequently uses an inverse fast Fourier transform (IFFT) to generate a physical channel carrying a time-domain multi-carrier symbol stream. Subsequently, the multi-antenna transmitting processor 471 performs a sending analog precoding/beamforming operation on the time-domain multi-carrier symbol stream. Each transmitting device 418 converts a baseband multi-carrier symbol stream provided by the multi-antenna transmitting processor 471 into a radio frequency stream, which is subsequently provided to a different antenna 420.

In the transmission from the second communication device 410 to the first communication device 450, at the first communication device 450, each receiving device 454 receives a signal by a corresponding antenna 452 thereof. Each receiving device 454 recovers the information modulated onto the RF carrier and converts the RF stream into the baseband multi-carrier symbol stream to be provided to the receiving processor 456. The receiving processor 456 and the multi-antenna receiving processor 458 implement various signal processing functions of the L1 layer. The multi-antenna receiving processor 458 performs a receiving analog precoding/beamforming operation on the baseband multi-carrier symbol stream from the receiving device 454. The receiving processor 456 uses a fast Fourier transform (FFT) to convert the baseband multi-carrier symbol stream after the receiving analog precoding/beamforming operation from the time domain to the frequency domain. In the frequency domain, a physical layer data signal and the reference signal are demultiplexed by the receiving processor 456, wherein the reference signal will be used for channel estimation, and the data signal is subjected to multi-antenna detection in the multi-antenna receiving processor 458 to recover any spatial stream with the first communication device 450 as the destination. The symbols on each spatial stream are demodulated and recovered in the receiving processor 456, and a soft decision is generated. Subsequently, the receiving processor 456 decodes and deinterleaves the soft decision to recover the upper-layer data and a control signal transmitted by the second communication device 410 on the physical channel. Subsequently, the upper-layer data and the control signal are provided to the controller/processor 459. The controller/processor 459 implements the functions of the L2 layer. The controller/processor 459 may be associated with a memory 460 storing program codes and data. The memory 460 may be referred to as a computer-readable medium. In the transmission from the second communication device 410 to the first communication device 450, the controller/processor 459 provides demultiplexing between transport and logical channels, packet reassembly, decryption, header decompression, and control signal processing to recover the upper-layer data packet from the core network. Subsequently, the upper-layer data packet is provided to all protocol layers above the L2 layer. Various control signals may also be provided to an L3 for L3 processing.

In the transmission from the first communication device 450 to the second communication device 410, at the first communication device 450, a data source 467 is used for providing the upper-layer data packet to the controller/processor 459. The data source 467 represents all protocol layers above the L2 layer. Similar to the sending function at the second communication device 410 described in the transmission from the second communication device 410 to the first communication device 450, the controller/processor 459 implements header compression, encryption, packet segmentation and reordering, and multiplexing between logical and transport channels based on wireless resource allocation, and implements L2 layer functions for the user plane and the control plane. The controller/processor 459 is also responsible for the retransmission of the lost packet, and for a signaling to the second communication device 410. The transmitting processor 468 performs modulation mapping and channel coding processing, and the multi-antenna transmitting processor 457 performs digital multi-antenna spatial precoding (comprising codebook-based precoding and non-codebook-based precoding) and beamforming processing. Subsequently, the transmitting processor 468 modulates the generated spatial stream into a multi-carrier/single-carrier symbol stream, which is provided to a different antenna 452 via the transmitting device 454 after an analog precoding/beamforming operation in the multi-antenna transmitting processor 457. Each transmitting device 454 first converts the baseband symbol stream provided by the multi-antenna transmitting processor 457 into a radio frequency symbol stream, which is then provided to the antenna 452.

In the transmission from the first communication device 450 to the second communication device 410, the function at the second communication device 410 is similar to the receiving function at the first communication device 450 described in the transmission from the second communication device 410 to the first communication device 450. Each receiving device 418 receives a radio frequency signal by a corresponding antenna 420 thereof, converts the received radio frequency signal into a baseband signal, and provides the baseband signal to the multi-antenna receiving processor 472 and the receiving processor 470. The receiving processor 470 and the multi-antenna receiving processor 472 jointly implement the functions of the L1 layer. The controller/processor 475 implements the L2 layer functions. The controller/processor 475 may be associated with a memory 476 storing program codes and data. The memory 476 may be referred to as a computer-readable medium. In the transmission from the first communication device 450 to the second communication device 410, the controller/processor 475 provides demultiplexing between transport and logical channels, packet reassembly, decryption, header decompression, and control signal processing to recover the upper-layer data packet from the UE450. The upper-layer data packet from the controller/processor 475 can be provided to the core network.

As one embodiment, the first communication device 450 comprises: at least one processor and at least one memory, wherein the at least one memory comprises a computer program code; The at least one memory and the computer program code are configured to be used with the at least one processor, and the first communication device 450 apparatus at least: first receives a target information set, the target information set being used for determining a first frequency domain resource set and a second frequency domain resource set; and then a first signal is sent in a first time-frequency resource set. The first frequency domain resource set and the second frequency domain resource set both belong to a first BWP; first serving cell configuration information is used for determining the first BWP, and the first serving cell configuration information is used for indicating a first identity and a second identity; the first identity and the second identity are respectively associated with the first frequency domain resource set and the second frequency domain resource set; the first serving cell configuration information is used for determining a first time domain resource set, at least one time domain resource in the first time domain resource set is associated with the first identity, and at least one time domain resource in the first time domain resource set is associated with the second identity; and frequency domain resources occupied by the first time-frequency resource set belong to one of the first frequency domain resource set or the second frequency domain resource set, and time domain resources occupied by the first time-frequency resource set belong to the first time domain resource set.

As one embodiment, the first communication device 450 comprises: a memory storing a computer-readable instruction program, wherein the computer-readable instruction program generates actions when executed by at least one processor, and the actions comprise: first receiving a target information set, the target information set being used for determining a first frequency domain resource set and a second frequency domain resource set; and then a first signal is sent in a first time-frequency resource set. The first frequency domain resource set and the second frequency domain resource set both belong to a first BWP; first serving cell configuration information is used for determining the first BWP, and the first serving cell configuration information is used for indicating a first identity and a second identity; the first identity and the second identity are respectively associated with the first frequency domain resource set and the second frequency domain resource set; the first serving cell configuration information is used for determining a first time domain resource set, at least one time domain resource in the first time domain resource set is associated with the first identity, and at least one time domain resource in the first time domain resource set is associated with the second identity; and frequency domain resources occupied by the first time-frequency resource set belong to one of the first frequency domain resource set or the second frequency domain resource set, and time domain resources occupied by the first time-frequency resource set belong to the first time domain resource set.

As one embodiment, the second communication device 410 comprises: at least one processor and at least one memory, wherein the at least one memory comprises a computer program code; the at least one memory and the computer program code are configured to be used with the at least one processor. The second communication device 410 device at least: first sends a target information set, the target information set being used for determining a first frequency domain resource set and a second frequency domain resource set; and then receives a first signal in a first time-frequency resource set, The first frequency domain resource set and the second frequency domain resource set both belong to a first BWP; first serving cell configuration information is used for determining the first BWP, and the first serving cell configuration information is used for indicating a first identity and a second identity; the first identity and the second identity are respectively associated with the first frequency domain resource set and the second frequency domain resource set; the first serving cell configuration information is used for determining a first time domain resource set, at least one time domain resource in the first time domain resource set is associated with the first identity, and at least one time domain resource in the first time domain resource set is associated with the second identity; and frequency domain resources occupied by the first time-frequency resource set belong to one of the first frequency domain resource set or the second frequency domain resource set, and time domain resources occupied by the first time-frequency resource set belong to the first time domain resource set.

As one embodiment, the second communication device 410 comprises: a memory storing a computer-readable instruction program, wherein the computer-readable instruction program generates actions when executed by at least one processor, and the actions comprise: first sending a target information set, the target information set being used for determining a first frequency domain resource set and a second frequency domain resource set; and then receives a first signal in a first time-frequency resource set, The first frequency domain resource set and the second frequency domain resource set both belong to a first BWP; first serving cell configuration information is used for determining the first BWP, and the first serving cell configuration information is used for indicating a first identity and a second identity; the first identity and the second identity are respectively associated with the first frequency domain resource set and the second frequency domain resource set; the first serving cell configuration information is used for determining a first time domain resource set, at least one time domain resource in the first time domain resource set is associated with the first identity, and at least one time domain resource in the first time domain resource set is associated with the second identity; and frequency domain resources occupied by the first time-frequency resource set belong to one of the first frequency domain resource set or the second frequency domain resource set, and time domain resources occupied by the first time-frequency resource set belong to the first time domain resource set.

As one embodiment, the first communication device 450 corresponds to the first node in the present application.

As one embodiment, the second communication device 410 corresponds to the second node in the present application.

As one embodiment, the first communication device 450 is one piece of UE.

As one embodiment, the first communication device 450 is one terminal.

As one embodiment, the first communication device 450 is one relay.

As one embodiment, the second communication device 410 is one base station.

As one embodiment, the second communication device 410 is one relay.

As one embodiment, the second communication device 410 is one network device.

As one embodiment, the second communication device 410 is one serving cell.

As one embodiment, the second communication device 410 is one TRP.

As one embodiment, the second communication device 410 comprises a plurality of TRPs.

As one embodiment, at least the first four of the antenna 452, the receiving device 454, the multi-antenna receiving processor 458, the receiving processor 456, and the controller/processor 459 are used for receiving the target information set; and at least the first four of the antenna 420, the transmitting device 418, the multi-antenna transmitting processor 471, the transmitting processor 416, and the controller/processor 475 are used for sending the target information set.

As one implementation, at least the first four of the antenna 452, the transmitting device 454, the multi-antenna transmitting processor 457, the transmitting processor 468, and the controller/processor 459 are used for sending the first signal in the first time-frequency resource set; and at least the first four of the antenna 420, the receiving device 418, the multi-antenna receiving processor 472, the receiving processor 470, and the controller/processor 475 are used for receiving the first signal in the first time-frequency resource set.

### Embodiment 5

Embodiment 5 illustrates a flow chart of one target information set, as shown in FIG. 5. In FIG. 5, a first node U1 communicates with a second node N2 by a radio link. It is particularly explained that the order in the present embodiment does not limit the signal transmission order and the implementation order in the present application.

For **a first node U1,** in step S10, a target information set is received; and in step S11, a first signal is sent in a first time-frequency resource set.

For **a second node N2,** in step S20, the target information set is sent; and in step S21, the first signal is received in the first time-frequency resource set.

In Embodiment 5, the target information set is used for determining a first frequency domain resource set and a second frequency domain resource set; The first frequency domain resource set and the second frequency domain resource set both belong to a first BWP; first serving cell configuration information is used for determining the first BWP, and the first serving cell configuration information is used for indicating a first identity and a second identity; the first identity and the second identity are respectively associated with the first frequency domain resource set and the second frequency domain resource set; the first serving cell configuration information is used for determining a first time domain resource set, at least one time domain resource in the first time domain resource set is associated with the first identity, and at least one time domain resource in the first time domain resource set is associated with the second identity; and frequency domain resources occupied by the first time-frequency resource set belong to one of the first frequency domain resource set or the second frequency domain resource set, and time domain resources occupied by the first time-frequency resource set belong to the first time domain resource set.

Typically, the first BWP is one downlink BWP, and the first frequency domain resource set and the second frequency domain resource set are both reserved for the uplink transmission.

As one embodiment, the first frequency domain resource set is reserved for the uplink transmission when the first identity is used, and the second frequency domain resource set is reserved for the uplink transmission when the second identity is used.

As one embodiment, the first frequency domain resource set is reserved for the uplink transmission when the first identity is associated with scheduling, and the second frequency domain resource set is reserved for the uplink transmission when the second identity is associated with the scheduling.

Typically, the first identity is one PCI, and the second identity is a PCI other than the PCI corresponding to the first identity.

Typically, the first identity is a PCI of the first serving cell, and the second identity is one PCI other than the PCI of the first serving cell.

As one embodiment, the first identity corresponds to one positive integer.

As one embodiment, the second identity corresponds to one positive integer.

As one embodiment, the first identity and the second identity are different.

Typically, the first signal and a target reference signal resource are quasi co-located, and the target reference signal resource is a first reference signal resource or a second reference signal resource; the first reference signal resource and the second reference signal resource are respectively associated with the first identity and the second identity; and the target reference signal resource is the first reference signal resource and the frequency domain resources occupied by the first time-frequency resource set belong to the first frequency domain resource set, or the target reference signal resource is the second reference signal resource and the frequency domain resources occupied by the first time-frequency resource set belong to the second frequency domain resource set.

As one embodiment, the target reference signal resource comprises an SSB.

As one embodiment, the target reference signal resource corresponds to one SSB-Index.

As one embodiment, the target reference signal resource comprises a CSI-RS resource.

As one embodiment, the target reference signal resource corresponds to one NZP-CSI-RS-ResourceId.

As one embodiment, the target reference signal resource comprises an SRS resource.

As one embodiment, the target reference signal resource corresponds to one SRS-ResourceId.

As one embodiment, the target reference signal resource is associated with one TCI.

As one embodiment, the target reference signal resource is associated with one TCI-State.

As one embodiment, the target reference signal resource is associated with one TCI-State-Id.

As one embodiment, the target reference signal resource is associated with one TCI-UL-State-Id.

As one embodiment, the first reference signal resource comprises the SSB.

As one embodiment, the first reference signal resource corresponds to one SSB-Index.

As one embodiment, the first reference signal resource comprises the CSI-RS resource.

As one embodiment, the first reference signal resource corresponds to one NZP-CSI-RS-ResourceId.

As one embodiment, the first reference signal resource comprises an SRS resource.

As one embodiment, the first reference signal resource corresponds to one SRS-ResourceId.

As one embodiment, the first reference signal resource is associated with one TCI.

As one embodiment, the first reference signal resource is associated with one TCI-State.

As one embodiment, the first reference signal resource is associated with one TCI-State-Id.

As one embodiment, the first reference signal resource is associated with one TCI-UL-State-Id.

As one embodiment, the second reference signal resource comprises the SSB.

As one embodiment, the second reference signal resource corresponds to one SSB-Index.

As one embodiment, the second reference signal resource comprises the CSI-RS resource.

As one embodiment, the second reference signal resource corresponds to one NZP-CSI-RS-ResourceId.

As one embodiment, the second reference signal resource comprises the SRS resource.

As one embodiment, the second reference signal resource corresponds to one SRS-ResourceId.

As one embodiment, the second reference signal resource is associated with one TCI (Transmission Configuration Indication).

As one embodiment, the second reference signal resource is associated with one TCI-State.

As one embodiment, the second reference signal resource is associated with one TCI-State-Id.

As one embodiment, the second reference signal resource is associated with one TCI-UL-State-Id.

As one embodiment, whether the frequency domain resources occupied by the first time-frequency resource set belong to the first frequency domain resource set or the second frequency domain resource set depends on whether the target reference signal resource is the first reference signal resource or the second reference signal resource.

As one embodiment, when the target reference signal resource is the first reference signal resource, the frequency domain resources occupied by the first time-frequency resource set belong to the first frequency domain resource set; and when the target reference signal resource is the second reference signal resource, the frequency domain resources occupied by the first time-frequency resource set belong to the second frequency domain resource set.

As one embodiment, the RRC signaling used for determining the first reference signal resource is simultaneously used for indicating the first identity.

As one embodiment, the RRC signaling used for determining the TCI-State corresponding to the first reference signal resource is simultaneously used for indicating the first identity.

As one embodiment, the RRC signaling used for determining the TCI-UL-State corresponding to the first reference signal resource is simultaneously used for indicating the first identity.

As one embodiment, the same RRC signaling is used for simultaneously determining a QCL (Quasi Co-located) relationship corresponding to the first reference signal resource and the first identity.

As one embodiment, the RRC signaling used for determining the second reference signal resource is simultaneously used for indicating the second identity.

As one embodiment, the RRC signaling used for determining the TCI-State corresponding to the second reference signal resource is simultaneously used for indicating the second identity.

As one embodiment, the RRC signaling used for determining the TCI-UL-State corresponding to the second reference signal resource is simultaneously used for indicating the second identity.

As one embodiment, the same RRC signaling is used for simultaneously determining the QCL relationship corresponding to the second reference signal resource and the second identity.

Typically, the first time domain resource set comprises a first time domain resource subset and a second time domain resource subset, and the first time domain resource subset and the second time domain resource subset are respectively associated with the first identity and the second identity; whether the frequency domain resources occupied by the first time-frequency resource set belong to the first frequency domain resource set or the second frequency domain resource set depends on whether the time domain resources occupied by the first time-frequency resource set belong to the first time domain resource subset or the second time domain resource subset.

As one embodiment, when the time domain resources occupied by the first time-frequency resource set belong to the first time domain resource subset, the frequency domain resources occupied by the first time-frequency resource set belong to the first frequency domain resource set; and when the time domain resources occupied by the first time-frequency resource set belong to the second time domain resource subset, the frequency domain resources occupied by the first time-frequency resource set belong to the second frequency domain resource set.

As one embodiment, whether the time domain resources occupied by the first time-frequency resource set belong to the first time domain resource subset or the second time domain resource subset depends on whether the target reference signal resource is the first reference signal resource or the second reference signal resource.

As one embodiment, when the target reference signal resource is the first reference signal resource, the time domain resources occupied by the first time-frequency resource set belong to the first time domain resource subset; and when the target reference signal resource is the second reference signal resource, the time domain resources occupied by the first time-frequency resource set belong to the second time domain resource subset.

As one embodiment, the first time domain resource subset comprises K3 time domain resources, the K3 is a positive integer greater than 1, and the K3 time domain resources correspond to K3 time slots, respectively.

As one embodiment, the first time domain resource subset comprises K3 time domain resources, the K3 is a positive integer greater than 1, and the K3 time domain resources correspond to K3 subframes, respectively.

As one embodiment, the first time domain resource subset comprises K3 time domain resources, the K3 is a positive integer greater than 1, and the K3 time domain resources correspond to K3 multi-carrier symbols, respectively.

As one embodiment, the second time domain resource subset comprises K4 time domain resources, the K4 is a positive integer greater than 1, and the K4 time domain resources correspond to K4 time slots, respectively.

As one embodiment, the second time domain resource subset comprises K4 time domain resources, the K4 is a positive integer greater than 1, and the K4 time domain resources correspond to K4 subframes, respectively.

As one embodiment, the second time domain resource subset comprises K4 time domain resources, the K4 is a positive integer greater than 1, and the K4 time domain resources correspond to K4 multi-carrier symbols, respectively.

Typically, the first serving cell configuration information comprises first downlink BWP configuration information, the first downlink BWP configuration information is used for configuring the first BWP, and the first downlink BWP configuration information is associated with target uplink configuration information; and the target uplink configuration information comprises at least one of pucch-Config, pusch-Config, configuredGrantConfig, or srs-Config, and the first signal uses the target uplink configuration information.

Typically, the target uplink configuration information is one of first uplink configuration information or second uplink configuration information, the first uplink configuration information is associated with the first identity, and the second uplink configuration information is associated with the second identity; and a TCI corresponding to the first signal is used for determining the target uplink configuration information from the first uplink configuration information and the second uplink configuration information.

### Embodiment 6

Embodiment 6 illustrates a schematic diagram of one target information set, as shown in FIG. 6. In FIG. 6, first serving cell configuration information comprises first downlink BWP configuration information, the target information set comprises first information and second information, and the first downlink BWP configuration information comprises the first information and the second information; the first serving cell configuration information comprises third information, and the third information is used for indicating a first time domain resource set; the first information and the second information are respectively used for indicating a first frequency domain resource set and a second frequency domain resource set; the first serving cell configuration information comprises a first identity and a second identity; and the first information and the second information are respectively associated with the first identity and the second identity.

As one embodiment, the first serving cell configuration information corresponds to ServingCellConfig IE in TS 38.331.

As one embodiment, the first serving cell configuration information corresponds to sCellConfigCommon IE in TS 38.331.

As one embodiment, the first serving cell configuration information corresponds to sCellConfigDedicated IE in TS 38.331.

As one embodiment, the first downlink BWP configuration information corresponds to BWP-DownlinkCommon IE in TS 38.331.

As one embodiment, the first downlink BWP configuration information corresponds to BWP-DownlinkDedicated IE in TS 38.331.

As one embodiment, the third information corresponds to TDD-UL-DL-ConfigCommon IE in TS 38.331.

As one embodiment, the third information corresponds to TDD-UL-DL-ConfigDedicated IE in TS 38.331.

### Embodiment 7

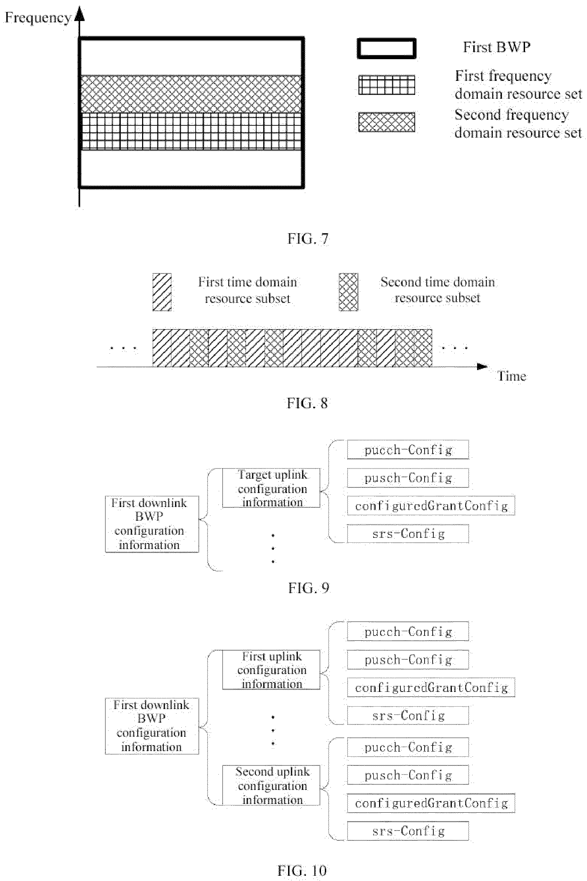

Embodiment 7 illustrates a schematic diagram of one first frequency domain resource set and one second frequency domain resource set, as shown in FIG. 7. In FIG. 7, a first BWP in the present application comprises the first frequency domain resource set and the second frequency domain resource set.

As one embodiment, the first frequency domain resource set and the second frequency domain resource set are independently configured.

As one embodiment, the first frequency domain resource set and the second frequency domain resource set are orthogonal in a frequency domain.

As one embodiment, the first frequency domain resource set and the second frequency domain resource set overlap in the frequency domain.

### Embodiment 8

Embodiment 8 illustrates a schematic diagram of one first time domain resource set, as shown in FIG. 8. In FIG. 8, the first time domain resource set in the present application comprises a first time domain resource subset and a second time domain resource subset.

As one embodiment, the first time domain resource subset and the second time domain resource subset are independently configured.

As one embodiment, the first time domain resource subset and the first time domain resource subset are orthogonal in a time domain.

As one embodiment, the first time domain resource subset and the second time domain resource subset overlap in a frequency domain.

### Embodiment 9

Embodiment 9 illustrates a schematic diagram of one first downlink BWP configuration information, as shown in FIG. 9. In FIG. 9, the first downlink BWP configuration information comprises target uplink configuration information, the target uplink configuration information comprises at least one of pucch-Config, pusch-Config, configuredGrantConfig, or srs-Config, and the first signal uses the target uplink configuration information.

As one embodiment, the first downlink BWP configuration information comprises the target uplink configuration information.

As one embodiment, the first downlink BWP configuration information is associated with uplink BWP configuration information, and the uplink BWP configuration information comprises the target uplink configuration information.

As one embodiment, the target uplink configuration information comprises pucch-Config IE.

As one sub-embodiment of this embodiment, a physical layer channel occupied by the first signal comprises a PUCCH.

As one embodiment, the target uplink configuration information comprises pusch-Config IE.

As one embodiment, the target uplink configuration information comprises configuredGrantConfig IE.

As one sub-embodiment of the above-mentioned two embodiments, the physical layer channel occupied by a first signal comprises a PUSCH.

As one embodiment, the target uplink configuration information comprises srs-Config IE.

As one sub-embodiment of this embodiment, the first signal comprises an SRS.

As one embodiment, the first downlink BWP configuration information comprises target downlink configuration information.

As one sub-embodiment of this embodiment, the target downlink configuration information comprises at least one of pdcch-Config, pdsch-Config, or sps-Config.

### Embodiment 10

Embodiment 10 illustrates a schematic diagram of one first downlink BWP configuration information, as shown in FIG. 10. In FIG. 10, the first downlink BWP configuration information comprises first uplink configuration information and second uplink configuration information, the first uplink configuration information is associated with a first identity, and the second uplink configuration information is associated with a second identity; and a TCI corresponding to the first signal is used for determining the target uplink configuration information from the first uplink configuration information and the second uplink configuration information.

As one embodiment, when the TCI corresponding to the first signal is associated with the first identity, the target uplink configuration information is the first uplink configuration information; and when the TCI corresponding to the first signal is associated with the second identity, the target uplink configuration information is the second uplink configuration information.

As one embodiment, the first uplink configuration information is directed at the first identity.

As one embodiment, the second uplink configuration information is directed at the second identity.

As one embodiment, the same RRC signaling is used for indicating the first uplink configuration information and the first identity.

As one sub-embodiment of this embodiment, the RRC signaling comprises ServingCellConfig IE.

As one embodiment, the same RRC signaling is used for indicating the second uplink configuration information and the second identity.

As one sub-embodiment of this embodiment, the RRC signaling comprises ServingCellConfig IE.

As one embodiment, the same RRC signaling is used for indicating the first uplink configuration information and the second uplink configuration information.

As one embodiment, the first signal and a target reference signal resource are quasi co-located, and the target reference signal resource is associated with one of the first identity or the second identity; and which of the first identity and the second identity the target reference signal resource is associated with is used for determining the target uplink configuration information from the first uplink configuration information and the second uplink configuration information.

As one embodiment, the first uplink configuration information comprises pucch-Config IE.

As one embodiment, the first uplink configuration information comprises pusch-Config IE.

As one embodiment, the first uplink configuration information comprises configuredGrantConfig IE.

As one embodiment, the first uplink configuration information comprises srs-Config IE.

As one embodiment, the second uplink configuration information comprises pucch-Config IE.

As one embodiment, the second uplink configuration information comprises pusch-Config IE.

As one embodiment, the second uplink configuration information comprises configuredGrantConfig IE.

As one embodiment, the second uplink configuration information comprises srs-Config IE.

### Embodiment 11

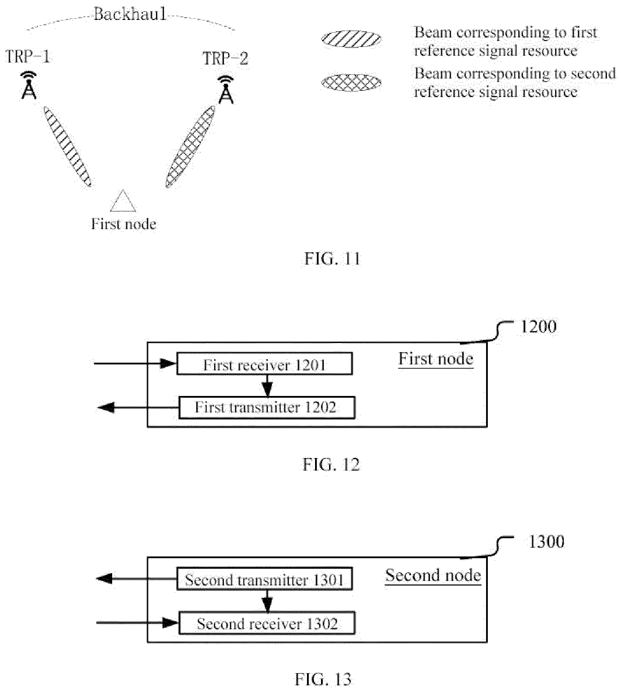

Embodiment 11 illustrates a schematic diagram of one application scenario, as shown in FIG. 11. In FIG. 11, TRP-1 and TRP-2 shown in the figure are both managed by a second node in the present application; a first identity in the present application is associated with the TRP-1, and a second identity in the present application is associated with the TRP-2; a first node moves in a coverage range of the TRP-1 and a coverage range of the TRP-2; and a beam corresponding to a first reference signal resource shown in the figure corresponds to the first identity, and a beam corresponding to a second reference signal resource shown corresponds to the second identity.

As one embodiment, a first frequency domain resource set is configured for the TRP-1.

As one embodiment, a second frequency domain resource set is configured for the TRP-2.

### Embodiment 12

Embodiment 12 illustrates a structural block diagram in one first node, as shown in FIG. 12. In FIG. 12, the first node 1200 comprises a first receiver 1201 and a first transmitter 1202.

The first receiver 1201 receives a target information set, the target information set being used for determining a first frequency domain resource set and a second frequency domain resource set.

The first transmitter 1202 sends a first signal in a first time-frequency resource set.

In Embodiment 12, the first frequency domain resource set and the second frequency domain resource set both belong to a first BWP; first serving cell configuration information is used for determining the first BWP, and the first serving cell configuration information is used for indicating a first identity and a second identity; the first identity and the second identity are respectively associated with the first frequency domain resource set and the second frequency domain resource set; the first serving cell configuration information is used for determining a first time domain resource set, at least one time domain resource in the first time domain resource set is associated with the first identity, and at least one time domain resource in the first time domain resource set is associated with the second identity; and frequency domain resources occupied by the first time-frequency resource set belong to one of the first frequency domain resource set or the second frequency domain resource set, and time domain resources occupied by the first time-frequency resource set belong to the first time domain resource set.

As one embodiment, the first BWP is one downlink BWP, and the first frequency domain resource set and the second frequency domain resource set are both reserved for the uplink transmission.

As one embodiment, the first identity is one PCI, and the second identity is one PCI other than the PCI corresponding to the first identity.

As one embodiment, the first signal and a target reference signal resource are quasi co-located, and the target reference signal resource is a first reference signal resource or a second reference signal resource; the first reference signal resource and the second reference signal resource are respectively associated with the first identity and the second identity; and the target reference signal resource is the first reference signal resource and the frequency domain resources occupied by the first time-frequency resource set belong to the first frequency domain resource set, or the target reference signal resource is the second reference signal resource and the frequency domain resources occupied by the first time-frequency resource set belong to the second frequency domain resource set.

As one embodiment, the first time domain resource set comprises a first time domain resource subset and a second time domain resource subset, and the first time domain resource subset and the second time domain resource subset are respectively associated with the first identity and the second identity; whether the frequency domain resources occupied by the first time-frequency resource set belong to the first frequency domain resource set or the second frequency domain resource set depends on whether the time domain resources occupied by the first time-frequency resource set belong to the first time domain resource subset or the second time domain resource subset.

As one embodiment, the first serving cell configuration information comprises first downlink BWP configuration information, the first downlink BWP configuration information is used for configuring the first BWP, and the first downlink BWP configuration information is associated with target uplink configuration information; and the target uplink configuration information comprises at least one of pucch-Config, pusch-Config, configuredGrantConfig, or srs-Config, and the first signal uses the target uplink configuration information.

As one embodiment, the target uplink configuration information is one of first uplink configuration information or second uplink configuration information, the first uplink configuration information is associated with the first identity, and the second uplink configuration information is associated with the second identity; and a TCI corresponding to the first signal is used for determining the target uplink configuration information from the first uplink configuration information and the second uplink configuration information.

As one embodiment, the first receiver 1201 comprises at least the first four of the antenna 452, the receiving device 454, the multi-antenna receiving processor 458, the receiving processor 456, and the controller/processor 459 in Embodiment 4.

As one embodiment, the first transmitter 1202 comprises at least the first four of the antenna 452, the transmitting device 454, the multi-antenna transmitting processor 457, the transmitting processor 468, and the controller/processor 459 in Embodiment 4.

### Embodiment 13

Embodiment 13 illustrates a structural block diagram in one second node, as shown in FIG. 13. In FIG. 13, the second node 1300 comprises a second transmitter 1301 and a second receiver 1302.

The second transmitter 1301 sends a target information set, the target information set being used for determining a first frequency domain resource set and a second frequency domain resource set.

The second receiver 1302 receives a first signal in a first time-frequency resource set.

In Embodiment 13, the first frequency domain resource set and the second frequency domain resource set both belong to a first BWP; first serving cell configuration information is used for determining the first BWP, and the first serving cell configuration information is used for indicating a first identity and a second identity; the first identity and the second identity are respectively associated with the first frequency domain resource set and the second frequency domain resource set; the first serving cell configuration information is used for determining a first time domain resource set, at least one time domain resource in the first time domain resource set is associated with the first identity, and at least one time domain resource in the first time domain resource set is associated with the second identity; and frequency domain resources occupied by the first time-frequency resource set belong to one of the first frequency domain resource set or the second frequency domain resource set, and time domain resources occupied by the first time-frequency resource set belong to the first time domain resource set.

As one embodiment, the first BWP is one downlink BWP, and the first frequency domain resource set and the second frequency domain resource set are both reserved for the uplink transmission.

As one embodiment, the first identity is one PCI, and the second identity is one PCI other than the PCI corresponding to the first identity.

As one embodiment, the first signal and a target reference signal resource are quasi co-located, and the target reference signal resource is a first reference signal resource or a second reference signal resource; the first reference signal resource and the second reference signal resource are respectively associated with the first identity and the second identity; and the target reference signal resource is the first reference signal resource and the frequency domain resources occupied by the first time-frequency resource set belong to the first frequency domain resource set, or the target reference signal resource is the second reference signal resource and the frequency domain resources occupied by the first time-frequency resource set belong to the second frequency domain resource set.

As one embodiment, the first time domain resource set comprises a first time domain resource subset and a second time domain resource subset, and the first time domain resource subset and the second time domain resource subset are respectively associated with the first identity and the second identity; whether the frequency domain resources occupied by the first time-frequency resource set belong to the first frequency domain resource set or the second frequency domain resource set depends on whether the time domain resources occupied by the first time-frequency resource set belong to the first time domain resource subset or the second time domain resource subset.

As one embodiment, the first serving cell configuration information comprises first downlink BWP configuration information, the first downlink BWP configuration information is used for configuring the first BWP, and the first downlink BWP configuration information is associated with target uplink configuration information; and the target uplink configuration information comprises at least one of pucch-Config, pusch-Config, configuredGrantConfig, or srs-Config, and the first signal uses the target uplink configuration information.

As one embodiment, the target uplink configuration information is one of first uplink configuration information or second uplink configuration information, the first uplink configuration information is associated with the first identity, and the second uplink configuration information is associated with the second identity; and a TCI corresponding to the first signal is used for determining the target uplink configuration information from the first uplink configuration information and the second uplink configuration information.

As one embodiment, the second transmitter 1301 comprises at least the first four of the antenna 420, the transmitting device 418, the multi-antenna transmitting processor 471, the transmitting processor 414, and the controller/processor 475 in Embodiment 4.

As one embodiment, the second receiver 1302 comprises at least the first four of the antenna 420, the receiving device 418, the multi-antenna receiving processor 472, the receiving processor 470, and the controller/processor 475 in Embodiment 4.

Those skilled in the art can understand that all or parts of the steps in the above-mentioned method can be completed by instructing the relevant hardware by a program, and the program can be stored in a computer-readable storage medium, such as a read-only memory, a hard disk or an optical disk. Optionally, all or parts of the steps in the above-mentioned embodiments can also be implemented by using one or more integrated circuits. Correspondingly, each module unit in the above-mentioned embodiments can be implemented in the form of hardware or in the form of a software function module. The present application is not limited to any specific form of combinations of software and hardware. The first node in the present application includes but is not limited to a mobile phone, a tablet computer, a notebook, a network card, a low-power device, an eMTC device, an NB-IoT device, a vehicle-mounted communication device, a transportation vehicle, a vehicle, an RSU (Road Side Unit), an aircraft, an airplane, a drone, a remote-controlled aircraft and other wireless communication devices. The second node in the present application includes but is not limited to a macro cell base station, a micro cell base station, a small cell base station, a femto cell, a relay base station, an eNB, a gNB, a transmission receiving node TRP, a GNSS (Global Navigation Satellite System), a relay satellite, a satellite base station, an air base station, an RSU, a drone, a test device, for example, a transceiver or a signaling tester that simulates some functions of a base station, and other wireless communication devices.

Those skilled in the art should understand that the present invention can be implemented in other specified forms without departing from the core or basic features thereof. Therefore, the embodiments currently disclosed should be regarded to be descriptive rather than restrictive in any way. The scope of the invention is determined by the appended claims rather than the preceding description, and all changes within their equivalent meanings and areas are deemed to be included therein.

## Claims

1. A first node used for wireless communication, comprising:
a first receiver for receiving a target information set, the target information set being used for determining a first frequency domain resource set and a second frequency domain resource set; and
a first transmitter for sending a first signal in a first time-frequency resource set,
wherein the first frequency domain resource set and the second frequency domain resource set both belong to a first BWP; first serving cell configuration information is used for determining the first BWP, and the first serving cell configuration information is used for indicating a first identity and a second identity; the first identity and the second identity are respectively associated with the first frequency domain resource set and the second frequency domain resource set; the first serving cell configuration information is used for determining a first time domain resource set, at least one time domain resource in the first time domain resource set is associated with the first identity, and at least one time domain resource in the first time domain resource set is associated with the second identity; and frequency domain resources occupied by the first time-frequency resource set belong to one of the first frequency domain resource set or the second frequency domain resource set, and time domain resources occupied by the first time-frequency resource set belong to the first time domain resource set.

2. The first node according to claim 1, wherein the first BWP is one downlink BWP, and the first frequency domain resource set and the second frequency domain resource set are both reserved for an uplink transmission.

3. The first node according to claim 1 or 2, wherein the first identity is one PCI, and the second identity is a PCI other than the PCI corresponding to the first identity.

4. The first node according to any one of claims 1 to 3, wherein the first signal and a target reference signal resource are quasi co-located, and the target reference signal resource is a first reference signal resource or a second reference signal resource; the first reference signal resource and the second reference signal resource are respectively associated with the first identity and the second identity; and the target reference signal resource is the first reference signal resource and the frequency domain resources occupied by the first time-frequency resource set belong to the first frequency domain resource set, or the target reference signal resource is the second reference signal resource and the frequency domain resources occupied by the first time-frequency resource set belong to the second frequency domain resource set.

5. The first node according to any one of claims 1 to 4, wherein the first time domain resource set comprises a first time domain resource subset and a second time domain resource subset, and the first time domain resource subset and the second time domain resource subset are respectively associated with the first identity and the second identity; and whether the frequency domain resources occupied by the first time-frequency resource set belong to the first frequency domain resource set or the second frequency domain resource set depends on whether the time domain resources occupied by the first time-frequency resource set belong to the first time domain resource subset or the second time domain resource subset.

6. The first node according to any one of claims 1 to 5, wherein the first serving cell configuration information comprises first downlink BWP configuration information, the first downlink BWP configuration information is used for configuring the first BWP, and the first downlink BWP configuration information is associated with target uplink configuration information; and the target uplink configuration information comprises at least one of pucch-Config, pusch-Config, configuredGrantConfig, or srs-Config, and the first signal uses the target uplink configuration information.

7. The first node according to claim 6, wherein the target uplink configuration information is one of first uplink configuration information or second uplink configuration information, the first uplink configuration information is associated with the first identity, and the second uplink configuration information is associated with the second identity; and a TCI corresponding to the first signal is used for determining the target uplink configuration information from the first uplink configuration information and the second uplink configuration information.

8. A second node used for wireless communication, comprising:
a second transmitter for sending a target information set, the target information set being used for determining a first frequency domain resource set and a second frequency domain resource set; and
a second receiver for receiving a first signal in a first time-frequency resource set,
wherein the first frequency domain resource set and the second frequency domain resource set both belong to a first BWP; first serving cell configuration information is used for determining the first BWP, and the first serving cell configuration information is used for indicating a first identity and a second identity; the first identity and the second identity are respectively associated with the first frequency domain resource set and the second frequency domain resource set; the first serving cell configuration information is used for determining a first time domain resource set, at least one time domain resource in the first time domain resource set is associated with the first identity, and at least one time domain resource in the first time domain resource set is associated with the second identity; and frequency domain resources occupied by the first time-frequency resource set belong to one of the first frequency domain resource set or the second frequency domain resource set, and time domain resources occupied by the first time-frequency resource set belong to the first time domain resource set.

9. A method for a first node used for wireless communication, comprising:
receiving a target information set, the target information set being used for determining a first frequency domain resource set and a second frequency domain resource set; and
sending a first signal in a first time-frequency resource set,
wherein the first frequency domain resource set and the second frequency domain resource set both belong to a first BWP; first serving cell configuration information is used for determining the first BWP, and the first serving cell configuration information is used for indicating a first identity and a second identity; the first identity and the second identity are respectively associated with the first frequency domain resource set and the second frequency domain resource set; the first serving cell configuration information is used for determining a first time domain resource set, at least one time domain resource in the first time domain resource set is associated with the first identity, and at least one time domain resource in the first time domain resource set is associated with the second identity; and frequency domain resources occupied by the first time-frequency resource set belong to one of the first frequency domain resource set or the second frequency domain resource set, and time domain resources occupied by the first time-frequency resource set belong to the first time domain resource set.

10. A method for a second node used for wireless communication, comprising:
sending a target information set, the target information set being used for determining a first frequency domain resource set and a second frequency domain resource set; and
receiving a first signal in a first time-frequency resource set,
wherein the first frequency domain resource set and the second frequency domain resource set both belong to a first BWP; first serving cell configuration information is used for determining the first BWP, and the first serving cell configuration information is used for indicating a first identity and a second identity; the first identity and the second identity are respectively associated with the first frequency domain resource set and the second frequency domain resource set; the first serving cell configuration information is used for determining a first time domain resource set, at least one time domain resource in the first time domain resource set is associated with the first identity, and at least one time domain resource in the first time domain resource set is associated with the second identity; and frequency domain resources occupied by the first time-frequency resource set belong to one of the first frequency domain resource set or the second frequency domain resource set, and time domain resources occupied by the first time-frequency resource set belong to the first time domain resource set.
